# EUROPEAN PATENT SPECIFICATION

(11) **EP 4 322 038 B1**
(45) Date of publication and mention of the grant of the patent: **01.04.2026**
(21) Application number: 21941810.0
(22) Date of filing: 10.05.2021
(51) Int. Cl.: G06F 21/64, G06F 16/13

(54) **FILE CONFIRMATION APPARATUS, FILE CONFIRMATION METHOD, AND FILE CONFIRMATION PROGRAM**
DATEIBESTÄTIGUNGSVORRICHTUNG, DATEIBESTÄTIGUNGSVERFAHREN UND DATEIBESTÄTIGUNGSPROGRAMM
APPAREIL DE CONFIRMATION DE FICHIER, PROCÉDÉ DE CONFIRMATION DE FICHIER ET PROGRAMME DE CONFIRMATION DE FICHIER

(43) Date of publication of application: 14.02.2024
(73) Proprietor: NTT, Inc., Tokyo 100-8116 (JP)
(72) Inventor: CHIBA, Nobuhiro, Musashino-shi, Tokyo 180-8585 (JP); OUCHI, Seishi, Musashino-shi, Tokyo 180-8585 (JP); TAKIGUCHI, Hiroyoshi, Musashino-shi, Tokyo 180-8585 (JP); YAMANAKA, Yuki, Musashino-shi, Tokyo 180-8585 (JP); ARAKAWA, Reika, Musashino-shi, Tokyo 180-8585 (JP); SATO, Ryota, Musashino-shi, Tokyo 180-8585 (JP); NAKAJIMA, Yoshiaki, Musashino-shi, Tokyo 180-8585 (JP); KOYAMA, Takaaki, Musashino-shi, Tokyo 180-8585 (JP)
(74) Representative: Hoffmann Eitle
(86) International application number: PCT/JP2021/017749
(87) International publication number: WO 2022/239076

(56) References cited:
- WO-A1-2016/175999
- JP-A- 2001 265 217
- JP-A- 2019 008 377
- JP-A- 2019 008 377
- US-A1- 2014 122 451
- US-A1- 2015 135 327
- US-A1- 2016 314 315

## Description

### [Technical Field]

The present invention relates to a file confirmation device, a file confirmation method, and a file confirmation program for confirming file integrity.

### [Background Art]

Conventionally, there is known a technique for collating the file integrity by detecting the loss of file data or the like without requiring direct access to the file.

Here, as a technique for confirming the integrity of the file in the equipment, there is a technique for defining a list indicating a combination of a file path in the equipment and a hash value of file data is defined as a determination reference, and inspecting there is a difference among the determination reference, a file path in equipment, and a hash value of file data to confirm the file integrity in the equipment (see, for example, PTL 1).

### [Citation List]

### [Patent Literature]

[PTL 1] Japanese Patent Application Publication No. 2019-008376

JP2019008377A describes file management including generating verification information to be used for managing a place to file. An acquiring unit acquires at least a part of the common definition information of the common showing the common definition information and the definition, and a common list of the common definition information and the element attribute acquired by the acquiring unit, as collation information.

WO2016/175999 A1 describes using a cryptographic hash function to prevent user identifiable information from being revealed in telemetry data that is being transferred. This includes replacing filenames in a first list of files by a hash value and determining whether a hash value in the list corresponds to a hash value of a second list of files. If a corresponding hash value is found, an original filename for the hash value is identified and their hash value in the first list of files is replaced by the filename.

US 2015/135327 A1 describes obfuscating relationships between data in relational data bases.

US 2014/122451 A1 describes preventing duplicate file uploads from a mobile device.

### [Summary of Invention]

### [Technical Problem]

However, the prior art has a problem that it is impossible to confirm the file integrity in the equipment while reducing the risk of leakage of the file path. For example, when confirming the data integrity of file by a third person having no access authority to the file, there is a possibility that confidential information will be leaked or inferred from information on the file path.

Also, for example, when a business operator or the like who is not permitted to access files in the equipment (for example, a user business operator or the like who is only to receive and use the equipment) confirms the file integrity, and there is a problem that a file path included in the determination reference is provided when the providing the reference.

Thus, even a business operator is originally unable to access the files in the equipment, concealment information such as software configuration information and software module version information may be leaked or inferred based on the information of the file path used as the determination reference.

Accordingly, it is a target of the present invention to solve the above-described problems and to confirm the integrity of files in equipment while reducing the risk of file paths being leaked.

### [Solution to Problem]

The above-mentioned problem is solved and this target is achieved by the features of the independent claims. Advantageous embodiments of the invention are disclosed in the dependent claims. A file confirmation device of an example includes an acquisition unit that acquires a file path of determination target equipment that is a determination target of file integrity, a concealment path generation unit that generates a concealment path for digesting the file path acquired by the acquisition unit for each file path, a concealment determination reference generation unit that generates a concealment determination reference in which the concealment path generated by the concealment path generation unit and a hash value obtained by digesting file data stored in the determination target equipment are listed in association with each other, a concealment list generation unit that generates a concealment list in which the file path stored in the determination target equipment and the concealment path generated by the concealment path generation unit are associated and listed, a determination reference generation unit that generates a determination reference by associating the file path with a hash value obtained by digesting the file data using the concealment determination reference generated by the concealment determination reference generation unit and the concealment list generated by the concealment list generation unit, and a collation unit that calculates a hash value for each piece of the file data in the determination target equipment and determines file integrity based on the hash value and a hash value included in the determination reference generated by the determination reference generation unit.

In addition, the file confirmation method of an example includes an acquisition process of acquiring a file path of determination target equipment that is a determination target of file integrity, a concealment path generation process of generating a concealment path for digesting the file path acquired in the acquisition process for each file path, a concealment determination reference generation process of generating a concealment determination reference in which the concealment path generated in the concealment path generation process and a hash value obtained by digesting file data stored in the determination target equipment are listed in association with each other, a concealment list generation process of generating a concealment list in which the file path stored in the determination target equipment and the concealment path generated in the concealment path generation process are associated and listed, a determination reference generation process of generating a determination reference by associating the file path with a hash value obtained by digesting the file data using the concealment determination reference generated in the concealment determination reference generation process and the concealment list generated in the concealment list generation process, and a process of calculating a hash value for each piece of the file data in the determination target equipment and determining file integrity based on the hash value and a hash value included in the determination reference generated in the determination reference generation process.

In addition, the file confirmation program of an example for causing a computer to execute an acquisition step of acquiring a file path of determination target equipment that is a determination target of file integrity, a concealment path generation step of generating a concealment path for digesting the file path acquired in the acquisition step for each file path, a concealment determination reference generation step of generating a concealment determination reference in which the concealment path generated in the concealment path generation step and a hash value obtained by digesting file data stored in the determination target equipment are listed in association with each other, a concealment list generation step of generating a concealment list in which the file path stored in the determination target equipment and the concealment path generated in the concealment path generation step are associated and listed, a determination reference generation step of generating a determination reference by associating the file path with a hash value obtained by digesting the file data using the concealment determination reference generated in the concealment determination reference generation step and the concealment list generated in the concealment list generation step, and a step of calculating a hash value for each piece of the file data in the determination target equipment and determining file integrity based on the hash value and a hash value included in the determination reference generated in the determination reference generation step.

### [Advantageous Effects of Invention]

According to the present invention, it is possible to confirm the file integrity in equipment while reducing the risk of leakage of a file path.

### [Brief Description of Drawings]

[Fig. 1] Fig. 1 is a block diagram illustrating a configuration of a file confirmation device according to a first embodiment.
[Fig. 2] Fig. 2 is a diagram illustrating an example of digest value generation conditions stored in a digest value generation condition storage unit of the file confirmation device of the first embodiment.
[Fig. 3] Fig. 3 is a diagram illustrating an example of a concealment determination reference stored in a concealment determination reference storage unit of the file confirmation device of the first embodiment.
[Fig. 4] Fig. 4 is a diagram illustrating an example of a concealment list stored in a concealment list storage unit of the file confirmation device of the first embodiment.
[Fig. 5] Fig. 5 is a diagram illustrating an example of a determination reference stored in a determination reference storage unit of the file confirmation device of the first embodiment.
[Fig. 6] Fig. 6 is a diagram illustrating an example of a flow of processing in which a determination reference generation unit of the file confirmation device according to the first embodiment restores the determination reference.
[Fig. 7] Fig. 7 is a diagram illustrating an example of a flow of processing to directly provide the concealment determination reference of the file confirmation device of the first embodiment and confirm the file integrity.
[Fig. 8] Fig. 8 is a diagram illustrating an example of a flow of processing for registering the concealment determination reference of the file confirmation device of the first embodiment on a shared base and confirming the file integrity.
[Fig. 9] Fig. 9 is a flowchart illustrating an example of a processing procedure for generating the concealment determination reference by the file confirmation device.
[Fig. 10] Fig 10 is a flowchart illustrating an example of a processing procedure for confirming the file integrity using the concealment determination reference of the file confirmation device.
[Fig. 11] Fig. 11 is a diagram illustrating a configuration example of a computer that executes a file confirmation program.

### [Description of Embodiments]

A first embodiment of the present invention will now be described with reference to the accompanying drawings. The present invention is not limited to these embodiments. A file confirmation device 10 inspects a list indicating a combination of a file path in a determination target equipment 1 and a hash value of file data as a determination reference and whether there is a difference between and a file path in the equipment and the hash value of the file data to confirm the file integrity in the equipment. The file confirmation device 10 generates a new determination reference (hereinafter referred to as a concealment determination reference) including information (hereinafter referred to as a concealment path) digested in place of the file path included in the determination reference so that the file path is not delivered to a third party, and the integrity is confirmed by using the concealment determination reference. Thus, the file confirmation device 10 confirms the file integrity in the equipment while reducing the risk of leakage of the file path.

Although all or a part of the functions of the file confirmation device 10 may be included in the determination target equipment 1 or may be included in a device different from the determination target equipment 1, hereinafter, it is assumed that the file confirmation device 10 is a device different from the determination target equipment 1. Although the processing at the time of generating the concealment determination reference and the processing at the time of confirming integrity using the concealment determination reference may be performed by separate devices, hereinafter, description will be given on the assumption that the file confirmation device 10 has a function of performing both processing when the concealment determination reference is generated and processing when the integrity is confirmed using the concealment determination reference.

### [First Embodiment]

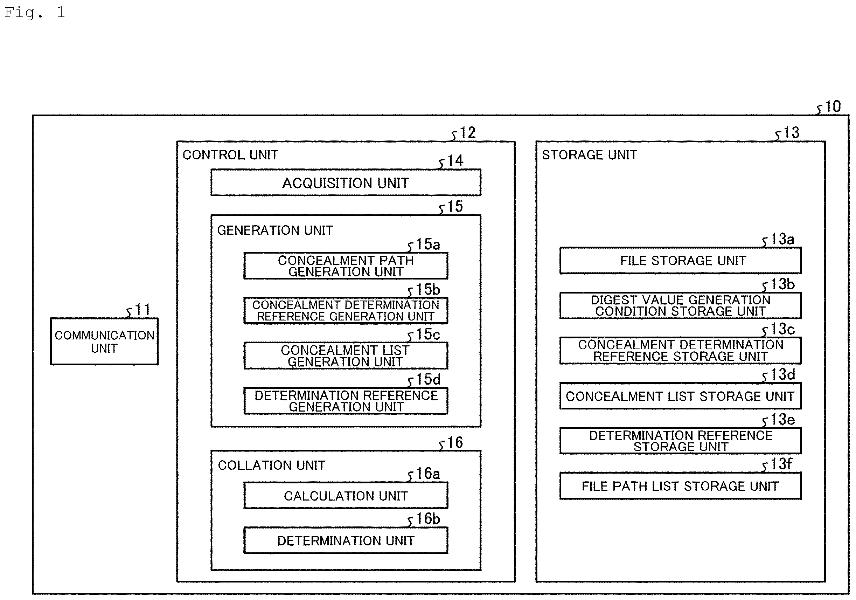

First, the configuration of the file confirmation device 10 illustrated in Fig. 1 will be described. As illustrated in Fig. 1, the file confirmation device 10 includes a communication unit 11, a control unit 12, and a storage unit 13. Processing of each unit of the file confirmation device 10 will be described below.

The communication unit 11 controls communication related to various pieces of information. For example, the communication unit 11 controls communication related to various pieces of information exchanged between the determination target equipment 1 and an information processing device connected via the file confirmation device 10 or a network. For example, the communication unit 11 receives file information of the determination target equipment 1 from the determination target equipment 1.

Next, the storage unit 13 will be described. The storage unit 13 stores data and programs required for various kinds of processing by the control unit 12, and includes a file storage unit 13a, a digest value generation condition storage unit 13b, a concealment determination reference storage unit 13c, a concealment list storage unit 13d, a determination reference storage unit 13e, and a file path list storage unit 13f. For example, the storage unit 13 is a semiconductor memory element such as a random access memory (RAM) or a flash memory or a storage device such as a hard disk or an optical disc.

The file storage unit 13a stores file information including a file path and file data in the determination target equipment 1 acquired by an acquisition unit 14 to be described later.

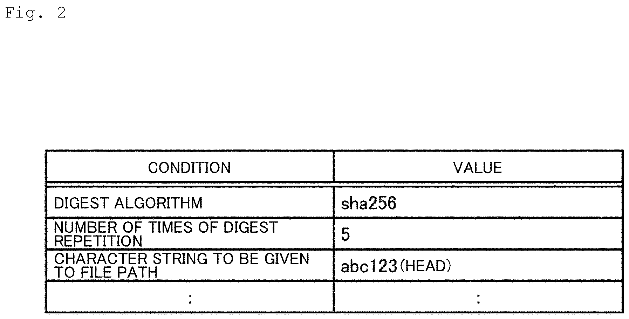

The digest value generation condition storage unit 13b stores a digest value generation condition which is a condition for generating a concealment path which is a digest value from the file path. Fig. 2 is a diagram illustrating an example of the digest value generation conditions stored in the digest value generation condition storage unit 13b of the file confirmation device 10 of the first embodiment. As illustrated in Fig. 2, the digest value generation condition storage unit 13b stores, as digest value generation conditions, a "digest algorithm" which is an algorithm for obtaining a digest value, the "number of times of repetition of digest conversion" which is the number of times of repetition of digest conversion, a "character string to be given to a file path" which is a character string to be given before and after the file path when digest conversion is performed, and the like.

Also, the digest value generation conditions of the digest value generation condition storage unit 13b can be arbitrarily set by a user. The digest value generation condition storage unit 13b transmits a digest value generation condition to a concealment path generation unit 15a described later. The concealment path generation unit 15a calculates the digest value (concealment path) of the file path according to the digest value generation condition received from the digest value generation condition storage unit 13b.

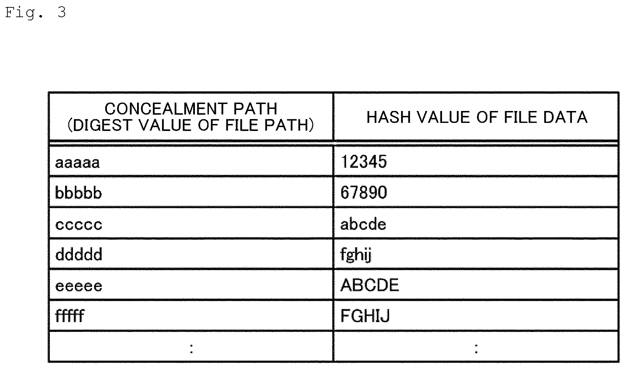

The concealment determination reference storage unit 13c stores a concealment determination reference generated by a concealment determination reference generation unit 15b described later. Fig. 3 is a diagram illustrating an example of the concealment determination reference stored in the concealment determination reference storage unit 13c of the file confirmation device 10 of the first embodiment. As illustrated in Fig. 3, the concealment determination reference storage unit 13c stores a concealment path and a hash value of file data in association with each other. The concealment determination reference storage unit 13c may store a previously generated concealment determination reference or may store a concealment determination reference provided by a user.

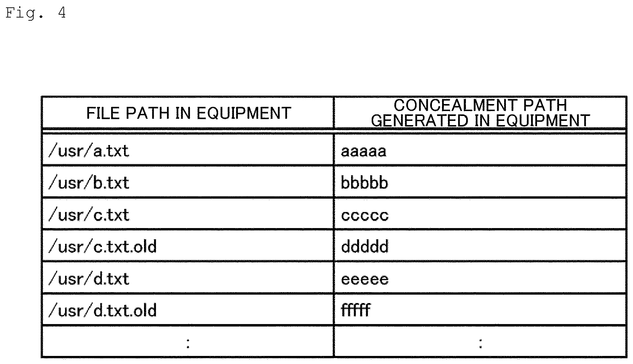

The concealment list storage unit 13d stores a concealment list. The concealment list is a list indicating a combination of a file path in the determination target equipment 1 and the concealment path generated by the concealment path generation unit 15a. Fig. 4 is a diagram illustrating an example of the concealment list stored in the concealment list storage unit 13d of the file confirmation device 10 according to the first embodiment. As illustrated in Fig. 4, the concealment list storage unit 13d stores a file path in the determination target equipment 1 and a concealment path generated in the determination target equipment 1.

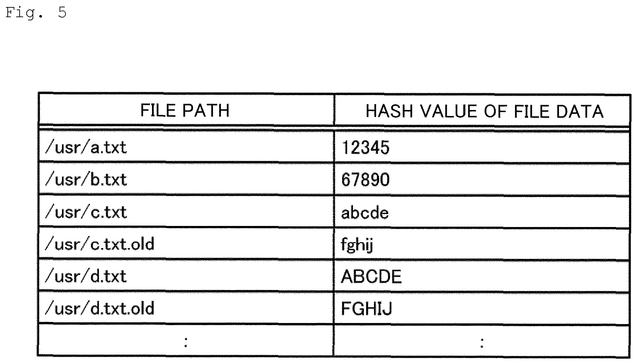

The determination reference storage unit 13e stores a determination reference generated by a determination reference generation unit 15d described later. Fig. 5 is a diagram illustrating an example of the determination reference stored in the determination reference storage unit 13e of the file confirmation device 10 of the first embodiment. As illustrated in Fig. 5, the determination reference storage unit 13e stores a determination reference in which a file path and a hash value of file data are associated with each other.

The file path list storage unit 13f stores an actual file path of the determination target equipment 1 and a hash value of file data. For example, at this time, the file path list storage unit 13f stores a hash value of file data in the determination target equipment 1 calculated by a calculation unit 16a to be described later.

Next, the control unit 12 will be described. The control unit 12 includes internal memories for storing necessary data and programs defining various processing procedures and the like and executes various kinds of processing with the aid of these memories. For example, the control unit 12 includes the acquisition unit 14, a generation unit 15, and a collation unit 16. The control unit 12 is an electronic circuit such as a central processing unit (CPU) or a micro processing unit (MPU) or an integrated circuit such as an application specific integrated circuit (ASIC) or a field programmable gate array (FPGA).

The acquisition unit 14 acquires a file path of the determination target equipment 1 which is a determination target of file integrity. For example, the acquisition unit 14 acquires file information including a file path and file data in the determination target equipment 1, and stores the file information including the acquired file path and file data in the file storage unit 13a.

In addition, the acquisition unit 14 may acquire the concealment determination reference provided to the third party from the outside via the communication unit 11, and store the concealment determination reference in the concealment determination reference storage unit 13c.

Subsequently, the generation unit 15 will be described. The generation unit 15 generates a concealment path, a concealment determination reference, a concealment list, and a determination reference. For example, the generation unit 15 includes the concealment path generation unit 15a, the concealment determination reference generation unit 15b, a concealment list generation unit 15c, and the determination reference generation unit 15d.

In addition, the concealment path generation unit 15a generates a concealment path for digesting the file path acquired by the acquisition unit 14 for each file path. Here, the concealment path is a value obtained by digesting the file path and reducing the amount of information. For example, the concealment determination reference generation unit 15b reads out a digest value generation condition from the digest value generation condition storage unit 13b, and calculates a digest value (concealment path) from a file path within the determination reference according to the digest value generation condition.

In addition, the concealment path generation unit 15a may receive setting of an arbitrary digest value generation condition from a user when generating a concealment path, and generate the concealment path according to the digest value generation conditions.

The concealment determination reference generation unit 15b generates a concealment determination reference in which the concealment path generated by the concealment path generation unit 15a and a hash value obtained by digesting file data stored in the determination target equipment 1 are made to be a list by associating them with each other.

For example, the concealment determination reference generation unit 15b generates a list in which a concealment path and a hash value of file data are associated, as illustrated in Fig. 3. That is, as illustrated in Fig. 3, the concealment determination reference generation unit 15b generates a concealment determination reference that is a new determination reference obtained by replacing the file path with the concealment path in a conventional list showing a combination of a file path in the determination target equipment 1 and a hash value of file data. Then, the concealment determination reference generation unit 15b outputs the generated concealment determination reference. The method of outputting the concealment determination reference may be any method as long as it can be outputted to provide the concealment determination reference to the arrival destination of the equipment.

The concealment list generation unit 15c generates a concealment list in which the file path stored in the determination target equipment 1 and the concealment path generated by the concealment path generation unit 15a are made into a list by associating them with each other. For example, the concealment list generation unit 15c acquires a file path list in the determination target equipment 1 when confirming the file integrity, generates a concealment path that is a digest value of the file path based on a digest value generation condition which is the same as that when generating a concealment determination reference, and generates a list of combinations of the file path and the concealment path.

The concealment list generation unit 15c generates a concealment list which is a list showing a combination of the concealment path generated by the concealment path generation unit 15a and the file path in the equipment based on the file path in the determination target equipment 1, as illustrated in Fig. 4.

The determination reference generation unit 15d generates a determination reference by associating a file path with a hash value obtained by digesting the file data using the concealment determination reference generated by the concealment determination reference generation unit 15b and the concealment list generated by the concealment list generation unit 15c.

For example, the determination reference generation unit 15d collates the concealment path included in the concealment determination reference generated by the concealment determination reference generation unit 15b with the concealment path included in the concealment list generated by the concealment list generation unit 15c, and in a case where there are identical concealment paths, acquires a hash value of file data corresponding to the concealment path from a concealment determination reference, and acquires a file path corresponding to the concealment path from a concealment list. Then, the determination reference generation unit 15d associates the acquired hash value with the file path to generate a determination reference as illustrated in Fig. 5.

Subsequently, the collation unit 16 will be described. The collation unit 16 calculates a hash value for each file data in the determination target equipment 1, and determines the file integrity based on the hash value and a hash value included in the determination reference generated by the determination reference generation unit 15d.

Also, the collation unit 16 includes the calculation unit 16a, and a determination unit 16b. The calculation unit 16a calculates a hash value for each file data in the determination target equipment 1. Then, the calculation unit 16a stores the calculated hash value in the file path list storage unit 13f. The determination unit 16b determines the file integrity based on the hash value calculated by the calculation unit 16a and the hash value included in the determination reference generated by the determination reference generation unit 15d.

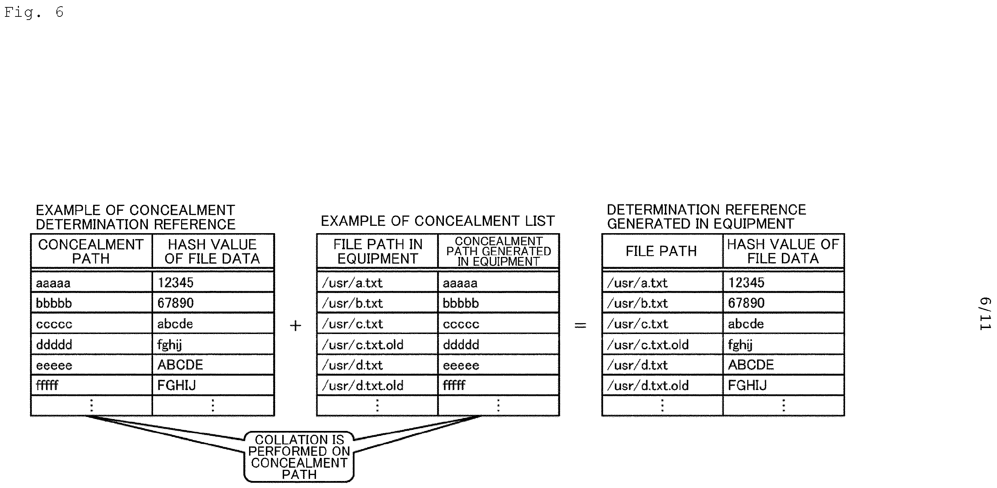

Fig. 6 is a diagram illustrating an example of a flow of processing for restoring the determination reference by the determination reference generation unit 15d of the file confirmation device 10 of the first embodiment. First, the acquisition unit 14 specifies which file path in the determination target equipment 1 the concealment path in the concealment determination reference indicates. The concealment path generation unit 15a generates a concealment path based on a file path in the equipment. The concealment list generation unit 15c generates a concealment list (Fig. 4) which is a list showing a combination of a file path in the equipment and the concealment path.

Thereafter, the concealment path of the concealment list generated by the concealment list generation unit 15c and the concealment path of the concealment determination reference are collated to each other, and thereby generating a file path in the equipment and a list equivalent to the conventional determination reference, which indicates combinations of hash values in the concealment determination references is generated.

Then, the calculation unit 16a calculates a hash value of the file data in the determination target equipment 1 from the found file path. By comparing the "hash value of the file data in the determination target equipment 1" calculated by the calculation unit 16a with the "hash value of the file data in the concealment determination reference," the file integrity can be confirmed.

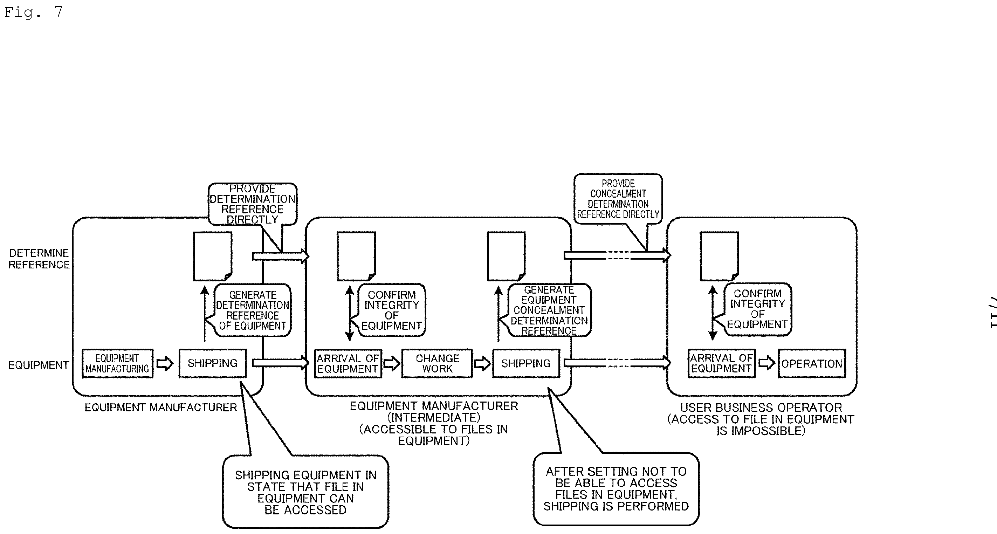

Fig. 7 is a diagram illustrating an example of the flow of processing for directly providing the concealment determination reference of the file confirmation device 10 of the first embodiment and confirming the file integrity. As illustrated in Fig. 7, for example, an equipment manufacturer manufactures equipment and ships the equipment to an equipment manufacturer (intermediate). In this case, a determination reference is generated in advance and the determination reference is directly provided. The "equipment" is the same as the determination target equipment 1.

Subsequently, the equipment manufacturer (intermediate) receives the determination reference and the equipment from the equipment manufacturer. The equipment manufacturer (intermediate) confirms the file integrity in the equipment using the determination reference. The equipment manufacturer (intermediate) generates a concealment determination reference of the equipment after the change work. The equipment manufacturer (intermediate) sets the access to the in-equipment file so as not to be possible. The equipment manufacturer (intermediate) directly provides the concealment determination reference to the user business operator and ships the equipment.

Subsequently, the user business operator receives the concealment determination reference and the equipment from the equipment manufacturer (intermediate). The user entrepreneur confirms the file integrity in the equipment using the concealment determination reference. After confirming the file integrity in the equipment, the user business operator starts the operation.

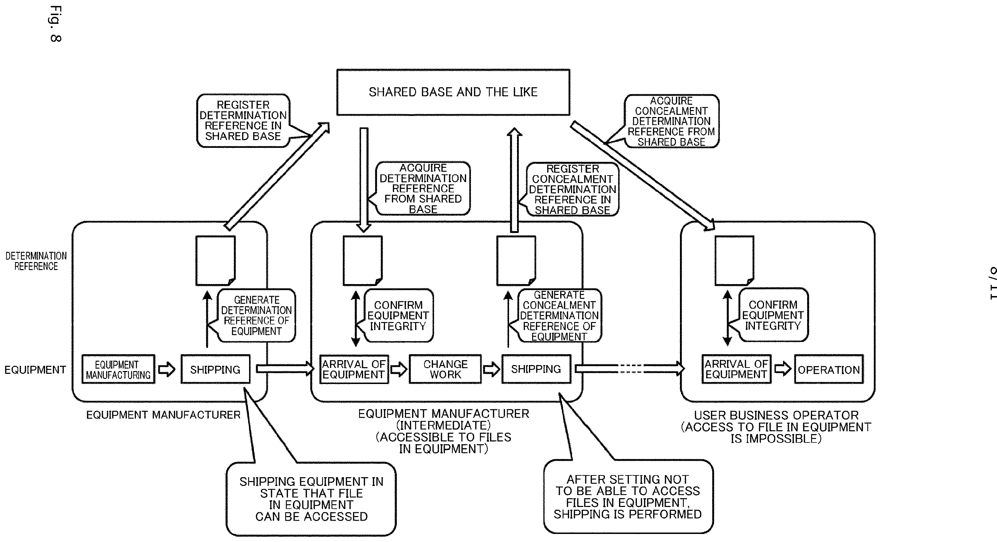

Fig. 8 is a diagram illustrating an example of the flow of processing for registering the concealment determination reference of the file confirmation device 10 of the first embodiment on the shared base and confirming the file integrity. As illustrated in Fig. 8, for example, an equipment manufacturer manufactures equipment and ships the equipment to an equipment manufacturer (intermediate). At that time, the determination reference is generated in advance, and the determination reference is registered in a shared base or the like.

Subsequently, the equipment manufacturer (intermediate) receives the equipment from the equipment manufacturer. The equipment manufacturer (intermediate) acquires a determination reference through a shared base or the like, and confirms the file integrity in the equipment by using the determination reference. After the change work, the equipment manufacturer (intermediate) generates a concealment determination reference of the equipment and registers it in a shared base or the like. The equipment manufacturer (intermediate) sets the access to the in-equipment file so as not to be possible, and ships the equipment to the user business operator.

Subsequently, the user business operator receives the equipment from the equipment manufacturer (intermediate). The user business operator acquires a concealment determination reference through a shared base or the like, and confirms the file integrity in the equipment using the concealment determination reference. After confirming the file integrity in the equipment, the user business operator starts the operation.

### [One Example of Processing of Classification Apparatus]

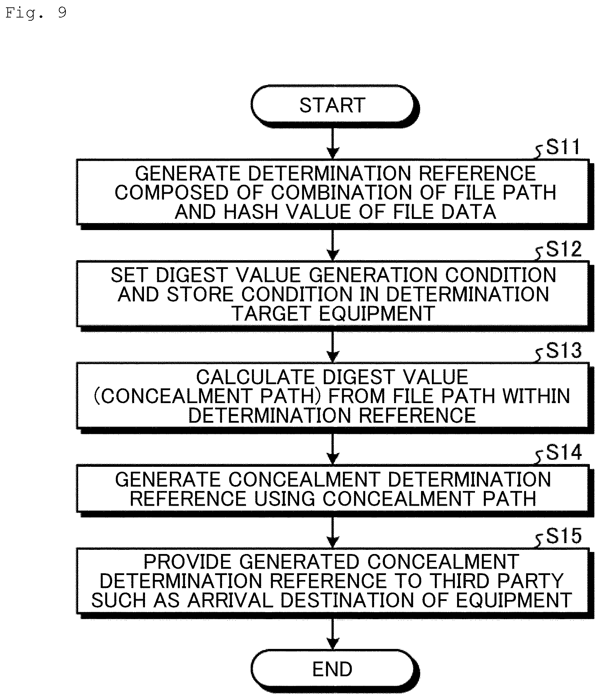

Next, an example of a processing procedure of generating the concealment determination reference of the file confirmation device 10 will be described with Fig. 9. Fig. 9 is a flowchart illustrating an example of a processing procedure for generating the concealment determination reference of the file confirmation device 10.

As illustrated in Fig. 9, the determination reference generation unit 15d generates a conventional determination reference composed of a combination of a file path and a hash value of file data (step S11). At this time, for example, the determination reference generation unit 15d generates a conventional determination reference which is composed of a combination of a file path and a hash value of file data by a system similar to a conventional system.

Next, the concealment path generation unit 15a sets a digest value generation condition and stores the condition in the digest value generation condition storage unit 13b in the determination target equipment 1 (step S12). For example, at this time, the digest value generation condition storage unit 13b may previously store the digest value generation conditions generated outside. In this case, for example, the digest value generation condition storage unit 13b may store the changed digest value generation condition.

Next, the concealment path generation unit 15a calculates a digest value (concealment path) from the file path within the determination reference, and the concealment determination reference generation unit 15b generates a concealment determination reference using the concealment path (step S13). For example, in this case, the concealment path generation unit 15a calculates a digest value (concealment path) from a file path within a determination reference according to the digest value generation condition, and transmits the calculated concealment path to the concealment determination reference generation unit 15b.

Next, the concealment determination reference generation unit 15b generates a concealment determination reference using the concealment path calculated by the concealment path generation unit 15a (step S14). For example, at this time, the concealment determination reference generation unit 15b generates a concealment determination reference composed of associating the concealment path generated in step S13 with the hash value of the file data, as illustrated in Fig. 3.

Next, the generated concealment determination reference is provided to a third party such as the arrival destination of the equipment (step S15). For example, at this time, as illustrated in Fig. 7, the concealment determination reference may be directly provided to a third party such as the destination of arrival of the equipment. In addition, for example, as illustrated in Fig. 8, the concealment determination reference may be registered in the shared base or the like, and a third party such as the destination of arrival of the equipment may acquire the concealment determination reference from the shared base or the like.

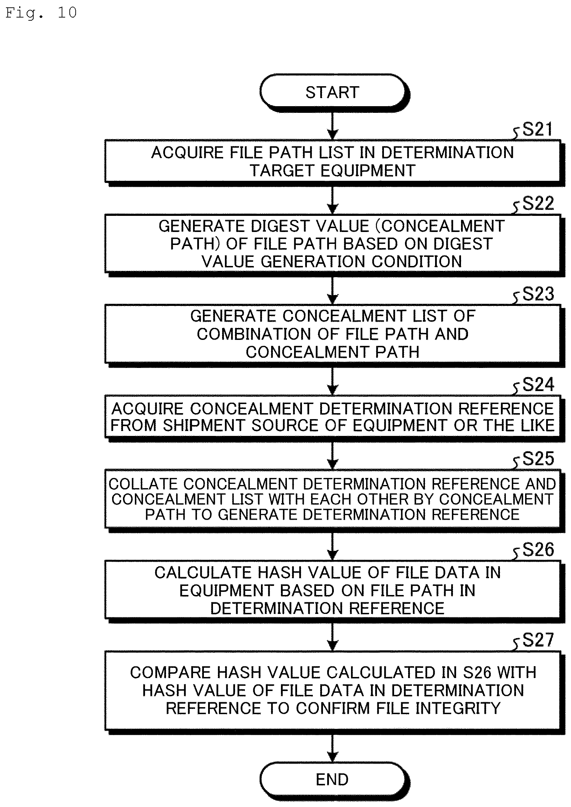

Next, an example of a processing procedure in which the file confirmation device 10 confirms the file integrity by using the concealment determination reference will be described with reference to Fig. 10. Fig. 10 is a flowchart illustrating an example of a processing procedure for confirming the file integrity using the concealment determination reference of the file confirmation device 10.

As illustrated in Fig. 10, the acquisition unit 14 acquires a list of file paths in the determination target equipment 1 (step S21). For example, at this time, the acquisition unit 14 may acquire a file path list in the determination target equipment 1 via the communication unit 11. In addition, for example, in a case where the file storage unit 13a stores file path information in advance, the acquisition unit 14 may acquire a file path list in the determination target equipment 1 from the file storage unit 13a.

Then, the concealment path generation unit 15a generates the digest value (concealment path) of the file path based on the digest value generation conditions stored in the digest value generation condition storage unit 13b (step S22). For example, at this time, the concealment path generation unit 15a may receive setting of an arbitrary digest value generation condition from a user when generating a concealment path, and generate the concealment path according to the digest value generation condition.

Subsequently, a concealment list generation unit 15c generates a list of combinations of the file path and the concealment path (step S23). The concealment list generation unit 15c generates a concealment list which is a list showing a combination of the concealment path generated by the concealment path generation unit 15a and the file path in the equipment based on the file path in the determination target equipment 1, as illustrated in Fig. 4.

Next, the acquisition unit 14 acquires a concealment determination reference from a shipping source or the like of the equipment (step S24). For example, at this time, as illustrated in Fig. 7, the acquisition unit 14 may acquire a concealment determination reference directly provided from an equipment manufacturer or the like from the outside. In addition, for example, as illustrated in Fig. 8, the acquisition unit 14 may acquire a concealment determination reference registered in a shared base or the like directly from a shared base or the like.

Next, the determination reference generation unit 15d collates the concealment determination reference with the concealment list by a concealment path to generate a determination reference (step S25). For example, at this time, the concealment determination reference and the concealment list are collated by the concealment path, and a list (determination reference) of combinations of the file path and the hash value of the file data is generated.

Then, the calculation unit 16a calculates a hash value of file data in the equipment based on the file path in the determination reference (step S26). For example, at this time, the calculation unit 16a stores the hash value of the calculated file data in the equipment in the file path list storage unit 13f.

Next, the determination unit 16b compares the hash value calculated in S26 with the hash value of the file data in the determination reference, and confirms the file integrity (step S27). For example, at this time, the determination unit 16b may store the determination result of the file integrity in the file path list storage unit 13f.

### [Effects of Embodiment 1]

Thus, the file confirmation device 10 according to Embodiment 1 acquires a file path of the determination target equipment 1 that is a determination target of the file integrity, generates a concealment path that is a value obtained by digesting the acquired file path for each file path, generates a concealment determination reference in which the generated concealment path is associated with a hash value obtained by digesting file data stored in the determination target equipment 1 to list the file data, generates a concealment list in which the file path stored in the determination target equipment 1 is associated with the generated concealment path to list the file data, generates a determination reference by associating a file path with a hash value obtained by digesting the file data by using the generated concealment determination reference and the concealment list, calculates a hash value for each file data in the determination target equipment 1, and since the file integrity is determined based on the hash value and the hash value included in the determination reference, can confirm the file integrity in the equipment while reducing the risk of leakage of the file path.

For example, in the file confirmation device 10 according to Embodiment 1, a business operator who defines a determination reference and ships equipment such as an equipment manufacturer, even if a file path in the equipment to be confidential information is not provided to a third party such as the arrival destination of arrival, the destination business operator can confirm the integrity of the equipment.

In addition, a business operator who has received the equipment such as a user enterprise can confirm the integrity of the arrived equipment based on the provided concealment determination reference.

For example, the file confirmation device 10 according to Embodiment 1 can set digest value generation conditions, which are conditions for generating digest values including a condition for the algorithm for obtaining the digest value that will be the concealment path, a condition for the number of repetitions of digesting, and a condition for the character string to be given to the file path when digesting and calculate the digest value of each file path using the digest value generation conditions.

As a known attack method for a mechanism using digest values, a rainbow table attack is given. In a case where an attacker attacks the system of the present proposal, a large amount of sets of various assumed file paths and corresponding digest values are generated, and the generated sets are collated with digest values (concealment paths) within a determination reference, thereby possibly finding the file paths.

As a countermeasure against this, "algorithm for obtaining a digest value" as a condition when generating a digest value (concealment path) from a file path, the "number of times of repetition of digest conversion," a "character string to be given to the file path when digest," or the like can be arbitrarily set, the digest value (concealment path) of the file path is calculated according to this condition. The digest value generation conditions are stored also in the equipment, and when the integrity is confirmed, the digest value (concealment path) may be calculated under the conditions. Further, if the condition is designated in a complicated manner, the attacker must calculate a huge amount of a set of assumed file paths and corresponding digest values, and it becomes difficult to decode the file paths in a practical time.

Further, a unit for generating a digest value is not set as a file unit, but set as a larger arbitrary unit (directory unit or the like), the number of concealment paths included in the determination reference is reduced, and the attacks can be neutralized by reducing the information amount for an attacker to guess the file path.

### [Program]

The file confirmation device 10 described above can be implemented by installing a program as package software or online software in a desired computer. For example, it is possible to cause an information processing apparatus to serve as the file confirmation device 10 of each embodiment by causing the information processing apparatus to execute the above-described program. An information processing apparatus as used here includes desktop and laptop personal computers. In other cases, the information processing apparatus includes a mobile communication terminal such as a smartphone, a mobile phone, or a personal handyphone system (PHS), and further includes terminals such as a personal digital assistant (PDA), or the like.

In addition, the file confirmation device 10 may be implemented as a server device which provides a service related to the processing to a client which is a terminal device used by a user. In this case, the server apparatus may be implemented as a Web server or as a cloud that provides services related to the processing described above by outsourcing.

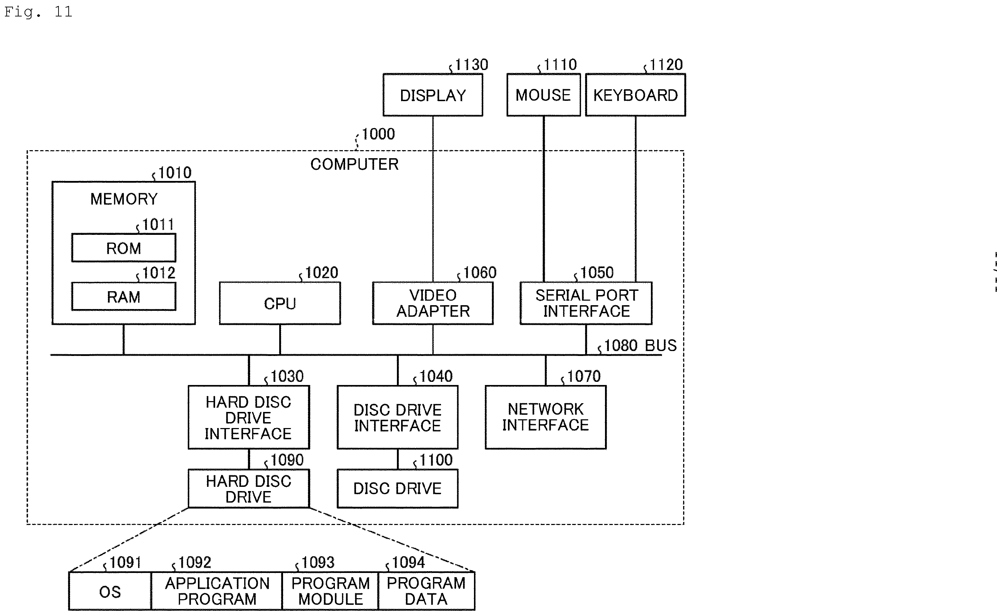

Fig. 11 is a diagram illustrating an example of a computer that executes a file confirmation program. A computer 1000 includes, e.g., a memory 1010 and a CPU 1020. Further, the computer 1000 also includes a hard disk drive interface 1030, a disk drive interface 1040, a serial port interface 1050, a video adapter 1060, and a network interface 1070. These units are connected to one another via a bus 1080.

The memory 1010 includes a read only memory (ROM) 1011 and a random access memory (RAM) 1012. The ROM 1011 stores, for example, a boot program such as a basic input output system (BIOS). The hard disk drive interface 1030 is connected to the hard disk drive 1090. The disk drive interface 1040 is connected to a disk drive 1100. For example, a removable storage medium such as a magnetic disk or an optical disc is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an OS 1091, an application program 1092, a program module 1093, and program data 1094. That is, a program that defines each type of processing executed by the above-described file confirmation device 10 is implemented as the program module 1093 in which computer-executable code is described. The program module 1093 is stored in, e.g., the hard disk drive 1090. For example, the program module 1093 for executing processing similar to the functional configuration of the file confirmation device 10 is stored in the hard disk drive 1090. Note that the hard disk drive 1090 may be replaced by an SSD.

Furthermore, each piece of data used in the processing of the above-described embodiment is stored, for example, in the memory 1010 or the hard disk drive 1090 as the program data 1094. In addition, the CPU 1020 reads out the program module 1093 and the program data 1094 stored in the memory 1010 or the hard disk drive 1090 onto the RAM 1012 and executes them as necessary.

Note that the program module 1093 and the program data 1094 are not limited to being stored in the hard disk drive 1090, and may be stored in, for example, a detachable storage medium and read by the CPU 1020 via the disk drive 1100 or the like. Alternatively, the program module 1093 and the program data 1094 may be stored in another computer connected via a network (a local area network (LAN), a wide area network (WAN), or the like). In addition, the program module 1093 and the program data 1094 may be read by the CPU 1020 from the other computer via the network interface 1070.

### [Reference Signs List]

- 1: Determination target equipment
- 10: File confirmation device
- 11: Communication unit
- 12: Control unit
- 13: Storage unit
- 13a: File storage unit
- 13b: Digest value generation condition storage unit
- 13c: Concealment determination reference storage unit
- 13d: Concealment list storage unit
- 13e: Determination reference storage unit
- 13f: File path list storage unit
- 14: Acquisition unit
- 15: Generation unit
- 15a: Concealment path generation unit
- 15b: Concealment determination reference generation unit
- 15c: Concealment list generation unit
- 15d: Determination reference generation unit
- 16: Collation unit
- 16a: Calculation unit
- 16b: Determination unit

## Claims

1. A file confirmation device (10) comprising:
an acquisition unit (14) that acquires a file path of determination target equipment that is a determination target of file integrity;
a concealment path generation unit (15a) that generates a concealment path for digesting the file path acquired by the acquisition unit (14) for each file path;
a concealment determination reference generation unit (15b) that generates a concealment determination reference in which the concealment path generated by the concealment path generation unit (15a) and a first hash value obtained by digesting file data stored in the determination target equipment are listed in association with each other and that provides the concealment determination reference to a shared base;
a concealment list generation unit (15c) that generates a concealment list in which the file path stored in the determination target equipment and the concealment path generated by the concealment path generation unit(15a) are associated and listed;
a determination reference generation unit (15d) that obtains the concealment determination reference acquired by the acquisition unit (14) from the shared base, and generates a determination reference by associating the file path with the first hash value obtained from the concealment determination reference generated by the concealment determination reference generation unit (15b) and the concealment list generated by the concealment list generation unit(15c); and
a collation unit (16) that calculates a second hash value for each piece of the file data in the determination target equipment and determines file integrity based on a comparison of the second hash value and the first hash value included in the determination reference generated by the determination reference generation unit (15d).

2. The file confirmation device (10) according to claim 1, wherein the concealment path generation unit(15a) sets a digest value generation condition under a condition for generating the digest value including a condition of an algorithm for obtaining the digest value to be the concealment path, a condition of the number of times of repetition of the digest, and a condition of a character string to be given to the file path when performing the digest, and calculates the digest value of each file path using the digest value generation condition.

3. The file confirmation device (10) according to claim 1, wherein the determination reference generation unit (15d) collates the concealment path included in the concealment determination reference with the concealment path included in the concealment list, and in a case where there is the same concealment path, acquires a hash value of the file data corresponding to the concealment path from the concealment determination reference, acquires a file path corresponding to the concealment path from the concealment list, and associates the acquired hash value with the file path to generate the determination reference.

4. A file confirmation method executed by a file confirmation device (10), the method comprising:
an acquisition process of acquiring a file path of determination target equipment that is a determination target of file integrity;
a concealment path generation process of generating a concealment path for digesting the file path acquired in the acquisition process for each file path;
a concealment determination reference generation process of generating a concealment determination reference in which the concealment path generated in the concealment path generation process and a first hash value obtained by digesting file data stored in the determination target equipment are listed in association with each other and providing the concealment determination reference to a shared base;
a concealment list generation process of generating a concealment list by associating the file path stored in the determination target equipment with the concealment path generated in the concealment path generation process;
a determination reference generation process of obtaining the concealment determination reference acquired by the acquisition process from the shared base, and generating a determination reference by associating the file path with the first hash value obtained from the concealment determination reference generated in the concealment determination reference generation process and the concealment list generated in the concealment list generation process; and
a process of calculating a second hash value for each piece of the file data in the determination target equipment and determining file integrity based on a comparison of the second hash value and the first hash value included in the determination reference generated in the determination reference generation process.

5. A file confirmation program for causing a computer (1000) to execute:
an acquisition step of acquiring a file path of determination target equipment that is a determination target of file integrity;
a concealment path generation step of generating a concealment path for digesting the file path acquired in the acquisition step for each file path;
a concealment determination reference generation step of generating a concealment determination reference in which the concealment path generated in the concealment path generation step and a first hash value obtained by digesting file data stored in the determination target equipment are listed in association with each other and providing the concealment determination reference to a shared base;
a concealment list generation step of generating a concealment list by associating the file path stored in the determination target equipment with the concealment path generated in the concealment path generation step;
a determination reference generation step of obtaining the concealment determination reference acquired by the acquisition step from the shared base, and generating a determination reference by associating the file path with the first hash value obtained from the concealment determination reference generated in the concealment determination reference generation step and the concealment list generated in the concealment list generation step; and
a step of calculating a second hash value for each piece of the file data in the determination target equipment and determining file integrity based on a comparison of the second hash value and the first hash value included in the determination reference generated in the determination reference generation step.

## Patentansprüche

1. Dateibestätigungsvorrichtung (10), umfassend:
eine Erfassungseinheit (14), die einen Dateipfad eines Bestimmungszielgeräts erfasst, das ein Bestimmungsziel der Dateiintegrität ist;
eine Verschleierungspfad-Generierungseinheit (15a), die für jeden Dateipfad einen Verschleierungspfad zum Berechnen eines Digest des von der Erfassungseinheit (14) erfassten Dateipfads erzeugt;
eine Verschleierungsbestimmungsreferenz-Generierungseinheit (15b), die eine Verschleierungsbestimmungsreferenz erzeugt, in der der von der Verschleierungspfad-Generierungseinheit (15a) erzeugte Verschleierungspfad und ein erster Hashwert, der durch Berechnen eines Digest von in dem Bestimmungszielgerät gespeicherten Dateidaten erhalten wird, in Zuordnung zueinander aufgelistet sind, und die die Verschleierungsbestimmungsreferenz einer gemeinsamen Basis bereitstellt;
eine Verschleierungsliste-Generierungseinheit (15c), die eine Verschleierungsliste erzeugt, in der der in dem Bestimmungszielgerät gespeicherte Dateipfad und der von der Verschleierungspfad-Generierungseinheit (15a) erzeugte Verschleierungspfad verknüpft und aufgelistet sind;
eine Bestimmungsreferenz-Generierungseinheit (15d), die die von der Erfassungseinheit (14) von der gemeinsamen Basis erworbene Verschleierungsbestimmungsreferenz erhält und eine Bestimmungsreferenz erzeugt, indem sie den Dateipfad mit dem ersten Hashwert verknüpft, der aus der von der Verschleierungsbestimmungsreferenz-Generierungseinheit (15b) erzeugten Verschleierungsbestimmungsreferenz und der von der Verschleierungsliste-Generierungseinheit (15c) erzeugten Verschleierungsliste erhalten wird; und
eine Abgleichseinheit (16), die für jedes Stück der Dateidaten in dem Bestimmungszielgerät einen zweiten Hashwert berechnet und Dateiintegrität, basierend auf einem Vergleich des zweiten Hashwerts und des in der von der Bestimmungsreferenz-Generierungseinheit (15d) erzeugten Bestimmungsreferenz enthaltenen ersten Hashwerts, bestimmt.

2. Dateibestätigungsvorrichtung (10) nach Anspruch 1, wobei die Verschleierungspfad-Generierungseinheit (15a) eine Digestwert-Erzeugungsbedingung unter einer Bedingung zur Erzeugung des Digestwerts festlegt, einschließlich einer Bedingung eines Algorithmus zum Erhalten des Digestwerts, der der Verschleierungspfad sein soll, einer Bedingung der Anzahl der Wiederholungen des Digests und einer Bedingung einer Zeichenkette, die dem Dateipfad beim Ausführen des Digests zu geben ist, und den Digestwert jedes Dateipfads unter Verwendung der Digestwert-Erzeugungsbedingung berechnet.

3. Dateibestätigungsvorrichtung (10) nach Anspruch 1, wobei die Bestimmungsreferenz-Generierungseinheit (15d) den in der Verschleierungsbestimmungsreferenz enthaltenen Verschleierungspfad mit dem in der Verschleierungsliste enthaltenen Verschleierungspfad abgleicht, und in einem Fall, in dem es den gleichen Verschleierungspfad gibt, einen Hashwert der Dateidaten, die dem Verschleierungspfad entsprechen, aus der Verschleierungsbestimmungsreferenz erwirbt, einen Dateipfad, der dem Verschleierungspfad entspricht, aus der Verschleierungsliste erwirbt, und den erworbenen Hashwert mit dem Dateipfad zur Erzeugung der Bestimmungsreferenz verknüpft.

4. Dateibestätigungsverfahren, ausgeführt durch eine Dateibestätigungsvorrichtung (10), wobei das Verfahren umfasst:
einen Erfassungsprozess des Erfassens eines Dateipfads eines Bestimmungszielgeräts, das ein Bestimmungsziel der Dateiintegrität ist;
einen Verschleierungspfad-Generierungsprozess des Erzeugens eines Verschleierungspfads zum Berechnen eines Digest des im Erfassungsprozess erfassten Dateipfads für jeden Dateipfad;
einen Verschleierungsbestimmungsreferenz-Generierungsprozess des Erzeugens einer Verschleierungsbestimmungsreferenz, in der der in dem Verschleierungspfad-Generierungsprozess erzeugte Verschleierungspfad und ein erster Hashwert, der durch Berechnen eines Digest von in dem Bestimmungszielgerät gespeicherten Dateidaten erhalten wird, in Zuordnung zueinander aufgelistet sind, und des Bereitstellens der Verschleierungsbestimmungsreferenz einer gemeinsamen Basis;
einen Verschleierungsliste-Generierungsprozess des Erzeugens einer Verschleierungsliste durch Verknüpfen des in dem Bestimmungszielgerät gespeicherten Dateipfads mit dem in dem Verschleierungspfad-Generierungsprozess erzeugten Verschleierungspfad;
einen Bestimmungsreferenz-Generierungsprozess des Erhaltens der von dem Erfassungsprozess von der gemeinsamen Basis erworbenen Verschleierungsbestimmungsreferenz und des Erzeugens einer Bestimmungsreferenz durch Verknüpfen des Dateipfads mit dem ersten Hashwert, der aus der in dem Verschleierungsbestimmungsreferenz-Generierungsprozess erzeugten Verschleierungsbestimmungsreferenz und der in dem Verschleierungsliste-Generierungsprozess erzeugten Verschleierungsliste erhalten wird; und
einen Prozess des Berechnens eines zweiten Hashwerts für jedes Stück der Dateidaten in dem Bestimmungszielgerät und des Bestimmens von Dateiintegrität, basierend auf einem Vergleich des zweiten Hashwerts und des ersten Hashwerts, der in der Bestimmungsreferenz, die in dem Bestimmungsreferenz-Generierungsschritt erzeugt wird, enthalten ist.

5. Dateibestätigungsprogramm zum Veranlassen eines Computers (1000), um Folgendes auszuführen:
einen Erfassungsschritt des Erfassens eines Dateipfads eines Bestimmungszielgeräts, das ein Bestimmungsziel der Dateiintegrität ist;
einen Verschleierungspfad-Generierungsschritt des Erzeugens eines Verschleierungspfads zum Berechnen eines Digest des im Erfassungsschritt erfassten Dateipfads für jeden Dateipfad;
einen Verschleierungsbestimmungsreferenz-Generierungsschritt des Erzeugens einer Verschleierungsbestimmungsreferenz, in der der in dem Verschleierungspfad-Generierungsschritt erzeugte Verschleierungspfad und ein erster Hashwert, der durch Berechnen eines Digest von in dem Bestimmungszielgerät gespeicherten Dateidaten erhalten wird, in Zuordnung zueinander aufgelistet sind, und des Bereitstellens der Verschleierungsbestimmungsreferenz einer gemeinsamen Basis;
einen Verschleierungsliste-Generierungsschritt des Erzeugens einer Verschleierungsliste durch Verknüpfen des in dem Bestimmungszielgerät gespeicherten Dateipfads mit dem in dem Verschleierungspfad-Generierungsschritt erzeugten Verschleierungspfad;
einen Bestimmungsreferenz-Generierungsschritt des Erhaltens der von dem Erfassungsschritt von der gemeinsamen Basis erworbenen Verschleierungsbestimmungsreferenz und des Erzeugens einer Bestimmungsreferenz durch Verknüpfen des Dateipfads mit dem ersten Hashwert, der aus der in dem Verschleierungsbestimmungsreferenz-Generierungsschritt erzeugten Verschleierungsbestimmungsreferenz und der in dem Verschleierungsliste-Generierungsschritt erzeugten Verschleierungsliste erhalten wird; und
einen Schritt des Berechnens eines zweiten Hashwerts für jedes Stück der Dateidaten in dem Bestimmungszielgerät und des Bestimmens von Dateiintegrität basierend auf einem Vergleich des zweiten Hashwerts und des ersten Hashwerts, der in der Bestimmungsreferenz, die in dem Bestimmungsreferenz-Generierungsschritt erzeugt wird, enthalten ist.

## Revendications

1. Dispositif de confirmation de fichier (10) comprenant :
une unité d'acquisition (14) qui acquiert un chemin d'accès au fichier de l'équipement cible de détermination qui est une cible de détermination d'intégrité de fichier ;
une unité de génération de chemin de dissimulation (15a) qui génère un chemin de dissimulation pour hacher le chemin d'accès au fichier acquis par l'unité d'acquisition (14) pour chaque chemin d'accès au fichier ;
une unité de génération de référence de détermination de dissimulation (15b) qui génère une référence de détermination de dissimulation dans laquelle le chemin de dissimulation généré par l'unité de génération de chemin de dissimulation (15a) et une première valeur de hachage obtenue par le hachage de données de fichier stockées dans l'équipement cible de détermination sont listés en association l'un avec l'autre et qui fournit la référence de détermination de dissimulation à une base partagée ;
une unité de génération de liste de dissimulation (15c) qui génère une liste de dissimulation dans laquelle le chemin d'accès au fichier stocké dans l'équipement cible de détermination et le chemin de dissimulation généré par l'unité de génération de chemin de dissimulation (15a) sont associés et listés ;
une unité de génération de référence de détermination (15d) qui obtient la référence de détermination de dissimulation acquise par l'unité d'acquisition (14) à partir de la base partagée, et génère une référence de détermination par l'association du chemin d'accès au fichier avec la première valeur de hachage obtenue à partir de la référence de détermination de dissimulation générée par l'unité de génération de référence de détermination de dissimulation (15b) et de la liste de dissimulation générée par l'unité de génération de liste de dissimulation (15c) ; et,
une unité de collation (16) qui calcule une deuxième valeur de hachage pour chaque élément des données de fichier dans l'équipement cible de détermination et détermine l'intégrité de fichier sur la base d'une comparaison de la deuxième valeur de hachage et de la première valeur de hachage incluse dans la référence de détermination générée par l'unité de génération de référence de détermination (15d).

2. Dispositif de confirmation de fichier (10) selon la revendication 1, dans lequel l'unité de génération de chemin de dissimulation (15a) définit une condition de génération de valeur d'empreinte selon une condition pour la génération de la valeur d'empreinte incluant une condition d'un algorithme pour obtenir la valeur d'empreinte devant être le chemin de dissimulation, une condition du nombre de reprises de répétition du hachage, et une condition d'une chaîne de caractères devant être donnée au chemin d'accès au fichier lors de la mise en œuvre du hachage, et calcule la valeur d'empreinte de chaque chemin d'accès au fichier en utilisant la condition de génération de valeur d'empreinte.

3. Dispositif de confirmation de fichier (10) selon la revendication 1, dans lequel l'unité de génération de référence de détermination (15d) collationne le chemin de dissimulation inclus dans la référence de détermination de dissimulation avec le chemin de dissimulation inclus dans la liste de dissimulation, et dans un cas où il y a le même chemin de dissimulation, acquiert une valeur de hachage des données de fichier correspondant au chemin de dissimulation à partir de la référence de détermination de dissimulation, acquiert un chemin d'accès au fichier correspondant au chemin de dissimulation à partir de la liste de dissimulation, et associe la valeur de hachage acquise avec le chemin d'accès au fichier pour générer la référence de détermination.

4. Procédé de confirmation de fichier mis en œuvre par un dispositif de confirmation de fichier (10), le procédé comprenant :
un processus d'acquisition consistant à acquérir un chemin d'accès au fichier d'un équipement cible de détermination qui est une cible de détermination d'intégrité de fichier ;
un processus de génération de chemin de dissimulation consistant à générer un chemin de dissimulation pour hacher le chemin d'accès au fichier acquis dans le processus d'acquisition pour chaque chemin d'accès au fichier ;
un processus de génération de référence de détermination de dissimulation consistant à générer une référence de détermination de dissimulation dans laquelle le chemin de dissimulation généré dans le processus de génération de chemin de dissimulation et une première valeur de hachage obtenue par le hachage de données de fichier stockées dans l'équipement cible de détermination sont listés en association l'un avec l'autre et à fournir la référence de détermination de dissimulation à une base partagée ;
un processus de génération de liste de dissimulation consistant à générer une liste de dissimulation par l'association du chemin d'accès au fichier stocké dans l'équipement cible de détermination avec le chemin de dissimulation généré dans le processus de génération de chemin de dissimulation ;
un processus de génération de référence de détermination consistant à obtenir la référence de détermination de dissimulation acquise par le processus d'acquisition à partir de la base partagée, et à générer une référence de détermination par l'association du chemin d'accès au fichier avec la première valeur de hachage obtenue à partir de la référence de détermination de dissimulation générée dans le processus de génération de référence de détermination de dissimulation et de la liste de dissimulation générée dans le processus de génération de liste de dissimulation ; et,
un processus consistant à calculer une deuxième valeur de hachage pour chaque élément des données de fichier dans l'équipement cible de détermination et à déterminer l'intégrité de fichier sur la base d'une comparaison de la deuxième valeur de hachage et de la première valeur de hachage incluse dans la référence de détermination générée dans le processus de génération de référence de détermination.

5. Programme de confirmation de fichier pour amener un ordinateur (1000) à exécuter :
une étape d'acquisition consistant à acquérir un chemin d'accès au fichier d'un équipement cible de détermination qui est une cible de détermination d'intégrité de fichier ;
une étape de génération de chemin de dissimulation consistant à générer un chemin de dissimulation pour hacher le chemin d'accès au fichier acquis dans l'étape d'acquisition pour chaque chemin d'accès au fichier ;
une étape de génération de référence de détermination de dissimulation consistant à générer une référence de détermination de dissimulation dans laquelle le chemin de dissimulation généré dans l'étape de génération de chemin de dissimulation et une première valeur de hachage obtenue par le hachage de données de fichier stockées dans l'équipement cible de détermination sont listés en association l'un avec l'autre et à fournir la référence de détermination de dissimulation à une base partagée ;
une étape de génération de liste de dissimulation consistant à générer une liste de dissimulation par l'association du chemin d'accès au fichier stocké dans l'équipement cible de détermination avec le chemin de dissimulation généré dans l'étape de génération de chemin de dissimulation ;
une étape de génération de référence de détermination consistant à obtenir la référence de détermination de dissimulation acquise par l'étape d'acquisition à partir de la base partagée, et à générer une référence de détermination par l'association du chemin d'accès au fichier avec la première valeur de hachage obtenue à partir de la référence de détermination de dissimulation générée dans l'étape de génération de référence de détermination de dissimulation et de la liste de dissimulation générée dans l'étape de génération de liste de dissimulation ; et
une étape consistant à calculer une deuxième valeur de hachage pour chaque élément des données de fichier dans l'équipement cible de détermination et à déterminer l'intégrité de fichier sur la base d'une comparaison de la deuxième valeur de hachage et de la première valeur de hachage incluse dans la référence de détermination générée dans l'étape de génération de référence de détermination.
